# EUROPEAN PATENT APPLICATION

(11) **EP 4 753 350 A1**
(43) Date of publication of application: **03.06.2026**
(21) Application number: 23946234.4
(22) Date of filing: 26.07.2023
(51) Int. Cl.: H04W 72/23

(54) **INFORMATION TRANSMISSION METHOD AND APPARATUS, COMMUNICATION DEVICE, COMMUNICATION SYSTEM, AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2023/109435
(87) International publication number: WO 2025/020147

(57) **Abstract**

Embodiments of the present disclosure provide an information transmission method and apparatus, a communication device, a communication system, and a storage medium. A first access network device transmits first information to a terminal, wherein the first information is used for indicating a first time domain configuration associated with a common resource, and the first time domain configuration is different from an initial time domain configuration associated with the common resource.

## Description

### TECHNICAL FIELD

The disclosure relates to the field of communication technologies, in particular to an information transmission method and an information transmission apparatus, a communication device, a communication system and a storage medium.

### BACKGROUND

The main application scenarios of 5th Generation (5G) mobile communication technology include: enhanced mobile broadband (eMBB), ultra-reliable and low latency communications (URLLC), and massive machine type communication (mMTC). The eMBB aims at providing users with access to multimedia content, services and data, and its demand is growing rapidly. Typical applications of URLLC include: industrial automation, power automation, remote medical operation (e.g., surgery), and traffic safety assurance. Typical characteristics of mMTC include: high connection density, small data volume, latency-insensitive services, low cost of modules and long service life.

### SUMMARY

As terminals become more feature-rich, their increased energy consumption leads to reduced battery life.

The embodiments of the disclosure provide an information transmission method and an information transmission apparatus, a communication device and a storage medium.

In a first aspect, the embodiments of the disclosure provide an information transmission method. The method is performed by a first access network device, and includes:
sending first information to a terminal, in which the first information indicates a first time-domain configuration associated with a common resource, and the first time-domain configuration is different from an initial time-domain configuration associated with the common resource.

In a second aspect, the embodiments of the disclosure provide an information transmission method. The method is performed by a terminal, and includes:
receiving first information sent by a first access network device, in which the first information indicates a first time-domain configuration associated with a common resource, and the first time-domain configuration is different from an initial time-domain configuration associated with the common resource.

In a third aspect, the embodiments of the disclosure provide an information transmission method. The method is performed by a second access network device, and includes:
receiving third information sent by a first access network device, in which the third information indicates at least one of:
a first time-domain configuration associated with a common resource associated with the first access network device, in which the first time-domain configuration is different from an initial time-domain configuration associated with the common resource; or
whether the common resource is valid at different transmission time-domain positions of the common resource, in which the transmission time-domain positions of the common resource are configured by the first time-domain configuration.

In a fourth aspect, the embodiments of the disclosure provide an information transmission method. The method is performed by a communication system, and includes:
sending by a first access network device first information to a terminal, in which the first information indicates a first time-domain configuration associated with a common resource, and the first time-domain configuration is different from an initial time-domain configuration associated with the common resource.

In a fifth aspect, the embodiments of the disclosure provide an information transmission apparatus. The apparatus includes:
a transceiver module, configured to send first information to a terminal, in which the first information indicates a first time-domain configuration associated with a common resource, and the first time-domain configuration is different from an initial time-domain configuration associated with the common resource.

In a sixth aspect, the embodiments of the disclosure provide an information transmission apparatus. The apparatus includes:
a transceiver module, configured to receive first information sent by a first access network device, in which the first information indicates a first time-domain configuration associated with a common resource, and the first time-domain configuration is different from an initial time-domain configuration associated with the common resource.

In a seventh aspect, the embodiments of the disclosure provide an information transmission apparatus. The apparatus includes:
a transceiver module, configured to receive third information sent by a first access network device, in which the third information indicates at least one of:
a first time-domain configuration associated with a common resource associated with the first access network device, in which the first time-domain configuration is different from an initial time-domain configuration associated with the common resource; or
whether the common resource is valid at different transmission time-domain positions of the common resource, in which the transmission time-domain positions of the common resource are configured by the first time-domain configuration.

In an eighth aspect, the embodiments of the disclosure provide a communication system. The system includes: a first access network device, a second access network device and a terminal.

The first access network device is configured to implement the information transmission method of the first aspect.

The terminal is configured to implement the information transmission method of the second aspect.

The second access network device is configured to implement the information transmission method of the third aspect.

In a ninth aspect, the embodiments of the disclosure provide a communication device. The communication device includes:
one or more processors;
in which the one or more processors are configured to call instructions to cause the communication device to implement the information transmission method of the first aspect, the information transmission method of the second aspect, or the information transmission method of the third aspect.

In a tenth aspect, the embodiments of the disclosure provide a storage medium. The storage medium stores instructions, and when the instructions are executed by a communication device, the communication device is caused to implement the information transmission method of the first aspect, the information transmission method of the second aspect, or the information transmission method of the third aspect.

The common resource is not limited by the initial time-domain configuration, and it may be flexibly configured using the first information, which improves the flexibility of time-domain configuration of the common resource.

It should be understood that both the above general descriptions and the following detailed descriptions are exemplary and explanatory only, and do not limit the embodiments of the disclosure.

### BRIEF DESCRIPTION OF THE DRAWINGS

The accompanying drawings, which are incorporated in and constitute a part of the specification, illustrate embodiments consistent with the disclosure and together with the specification, serve to explain the principles of the embodiments of the disclosure.
FIG. 1 is a schematic structural diagram of a communication system illustrated according to an example embodiment.
FIG. 2a is a flowchart of an information transmission method illustrated according to an example embodiment.
FIG. 3a is a flowchart of an information transmission method illustrated according to an example embodiment.
FIG. 3b is a flowchart of an information transmission method illustrated according to an example embodiment.
FIG. 4a is a flowchart of an information transmission method illustrated according to an example embodiment.
FIG. 4b is a flowchart of an information transmission method illustrated according to an example embodiment.
FIG. 4c is a flowchart of an information transmission method illustrated according to an example embodiment.
FIG. 4d is a flowchart of an information transmission method illustrated according to an example embodiment.
FIG. 5 is a flowchart of an information transmission method illustrated according to an example embodiment.
FIG. 6 is a flowchart of an information transmission method illustrated according to an example embodiment.
FIG. 7a is a schematic structural diagram of a terminal illustrated according to an example embodiment.
FIG. 7b is a schematic structural diagram of an access network device illustrated according to an example embodiment.
FIG. 7c is a schematic structural diagram of an access network device illustrated according to an example embodiment.
FIG. 8a is a schematic structural diagram of a user equipment (UE) illustrated according to an example embodiment.
FIG. 8b is a schematic structural diagram of a communication device illustrated according to an example embodiment.

### DETAILED DESCRIPTION

The embodiments of the disclosure provide an information transmission method and an information transmission apparatus, a communication device, a communication system and a storage medium.

In the first aspect, the embodiments of the disclosure provide an information transmission method. The method is performed by a first access network device, and includes:
sending first information to a terminal, in which the first information indicates a first time-domain configuration associated with a common resource, and the first time-domain configuration is different from an initial time-domain configuration associated with the common resource.

In the above embodiments, the common resource may be unlimited by the initial time-domain configuration, and it may be flexibly configured using the first information, which improves the flexibility of time-domain configuration of the common resource.

In combination with some embodiments of the first aspect, in some embodiments, the first information indicates the first time-domain configuration associated with the common resource within at least one time-domain window.

In the above embodiments, through a semi-static configuration within at least one time-domain window, semi-static configuration of the common resource is realized. The common resource is not limited by the initial time-domain configuration, and it may be flexibly configured through the first information, which improves the flexibility of time-domain configuration of the common resource.

In combination with some embodiments of the first aspect, in some embodiments, the method includes:
sending second information to the terminal, in which the second information indicates whether the common resource is valid at different transmission time-domain positions of the common resource, and the transmission time-domain positions of the common resource are configured by the first time-domain configuration.

In the above embodiments, the second information indicates valid transmission time-domain positions where the common resource is valid or invalid transmission time-domain positions where the common resource is invalid, which improves the accuracy of monitoring the common resource.

In combination with some embodiments of the first aspect, in some embodiments, the first time-domain configuration includes at least one of:
a period associated with the common resource;
transmission time-domain positions of the common resource; or
whether the common resource is valid at different transmission time-domain positions.

In the above embodiments, the common resource is not limited by the initial time-domain configuration, and a period of the common resource may be flexibly configured using the first information, which improves the flexibility of the period of the common resource.

In combination with some embodiments of the first aspect, in some embodiments, the common resource includes at least one of:
a synchronization signal/physical broadcast channel block (SSB);
a system message block (SIB);
a common physical downlink control channel (PDCCH); or
a random access channel (RACH).

In the above embodiments, the common resource (e.g., SSB) is not limited by the initial time-domain configuration, and it may be flexibly configured using the first information, which improves the flexibility of time-domain configuration of the common resource. Moreover, the second information indicates valid transmission time-domain positions where the common resource is valid or invalid transmission time-domain positions where the common resource is invalid, which improves the accuracy of monitoring the common resource.

In combination with some embodiments of the first aspect, in some embodiments, the method includes:
sending third information to a second access network device, in which the third information indicates at least one of:
the first time-domain configuration of the common resource; or
whether the common resource is valid at different transmission time-domain positions of the common resource, in which the transmission time-domain positions of the common resource are configured by the first time-domain configuration.

In the above embodiments, the first access network device indicates, the updated first time-domain configuration of the common resource and the valid transmission time-domain positions where the common resource is valid or the invalid transmission time-domain positions where the common resource is invalid, to the second access network, so that the second access network device may determine the condition of the common resource of the first access network device.

In combination with some embodiments of the first aspect, in some embodiments, the third information further indicates at least one of:
a cell discontinuous transmission (DTX) configuration of the first access network device; or
whether the first access network device configures a cell DTX configuration.

In the above embodiments, the first access network device indicates the cell DTX configuration to the second access network device, so that the second access network device may determine the condition of the cell DTX configuration of the first access network device.

In combination with some embodiments of the first aspect, in some embodiments, the third information is used for the second access network device to determine an SSB measurement time configuration (SMTC).

In the above embodiments, the second access network device determines the SMTC based on the time-domain configuration of the common resource and the DTX configuration of the first access network device, which improves the accuracy of the terminal in neighbor cell measurement.

In combination with some embodiments of the first aspect, in some embodiments, sending the first information includes: sending the first information within a first modification period, in which the first information is valid within a second modification period, a time-domain position of the second modification period is adjacent to a time-domain position of the first modification period, and the time-domain position of the second modification period is after the time-domain position of the first modification period.

In combination with some embodiments of the first aspect, in some embodiments, a length of the first modification period and/or a length of the second modification period is equal to N times a length of a cell discontinuous reception (DRX) cycle, and N is a positive integer.

In combination with some embodiments of the first aspect, in some embodiments, sending the first information to the terminal includes:
sending paging downlink control information (DCI) carrying the first information to the terminal.

In combination with some embodiments of the first aspect, in some embodiments, the paging DCI is sent within a first modification period, in which the first modification period is associated with a system message update.

In a second aspect, the embodiments of the disclosure provide an information transmission method. The method is performed by a terminal, and includes:
receiving first information sent by a first access network device, in which the first information indicates a first time-domain configuration associated with a common resource, and the first time-domain configuration is different from an initial time-domain configuration associated with the common resource.

In the above embodiments, the common resource is not limited by the initial time-domain configuration, and it may be flexibly configured using the first information, which improves the flexibility of time-domain configuration of the common resource.

In combination with some embodiments of the second aspect, in some embodiments, the first information indicates the first time-domain configuration associated with the common resource within at least one time-domain window.

In the above embodiments, through a semi-static configuration within at least one time-domain window, semi-static configuration of the common resource is realized. The common resource is not limited by the initial time-domain configuration, and it may be flexibly configured using the first information, which improves the flexibility of time-domain configuration of the common resource.

In combination with some embodiments of the second aspect, in some embodiments, the method includes:
receiving second information sent by the first access network device, in which the second information indicates whether the common resource is valid at different transmission time-domain positions of the common resource, and the transmission time-domain positions of the common resource are configured by the first time-domain configuration.

In the above embodiments, the second information indicates valid transmission time-domain positions where the common resource is valid or invalid transmission time-domain positions where the common resource is invalid, which improves the accuracy of monitoring the common resource.

In combination with some embodiments of the second aspect, in some embodiments, the first time-domain configuration includes at least one of:
a period associated with the common resource;
transmission time-domain positions of the common resource; or
whether the common resource is valid at different transmission time-domain positions.

In the above embodiments, the common resource is not limited by the initial time-domain configuration, and a period of the common resource may be flexibly configured using the first information, which improves the flexibility of the period of the common resource.

In combination with some embodiments of the second aspect, in some embodiments, the common resource includes at least one of:
an SSB;
an SIB;
a common PDCCH; or
an RACH.

In the above embodiments, the common resource (e.g., SSB) is not limited by the initial time-domain configuration, and it may be flexibly configured using the first information, which improves the flexibility of time-domain configuration of the common resource. Moreover, the second information indicates valid transmission time-domain positions where the common resource is valid or invalid transmission time-domain positions where the common resource is invalid, which improves the accuracy of monitoring the common resource.

In combination with some embodiments of the second aspect, in some embodiments, receiving the first information sent by the first access network device, includes:
receiving the first information within a first modification period, in which the first information is valid within a second modification period, a time-domain position of the second modification period is adjacent to a time-domain position of the first modification period, and the time-domain position of the second modification period is after the time-domain position of the first modification period.

In combination with some embodiments of the second aspect, in some embodiments, a length of the first modification period and/or a length of the second modification period is equal to N times of a length of a cell DRX cycle, and N is a positive integer.

In combination with some embodiments of the second aspect, in some embodiments, receiving the first information sent by the first access network device, includes:
receiving paging DCI carrying the first information sent by the first access network device.

In combination with some embodiments of the second aspect, in some embodiments, the paging DCI is received within the first modification period.

In a third aspect, the embodiments of the disclosure provide an information transmission method. The method is performed by a second access network device, and includes:
receiving third information sent by a first access network device, in which the third information indicates at least one of:
a first time-domain configuration associated with a common resource associated with the first access network device, in which the first time-domain configuration is different from an initial time-domain configuration associated with the common resource; or
whether the common resource is valid at different transmission time-domain positions of the common resource, in which the transmission time-domain positions of the common resource are configured by the first time-domain configuration.

In the above embodiments, the first access network device indicates, the updated first time-domain configuration of the common resource and valid transmission time-domain position where the common resource is valid or invalid transmission time-domain position where the common resource is invalid, to the second access network, so that the second access network device may determine the condition of the common resource of the first access network device.

In combination with some embodiments of the third aspect, in some embodiments, the third information indicates the first time-domain configuration associated with the common resource within at least one time-domain window.

In the above embodiments, through a semi-static configuration within at least one time-domain window, semi-static configuration of the common resource is realized. The common resource is not limited by the initial time-domain configuration, and it may be flexibly configured using the first information, which improves the flexibility of time-domain configuration of the common resource.

In combination with some embodiments of the third aspect, in some embodiments, the first time-domain configuration includes at least one of:
a period associated with the common resource;
transmission time-domain positions of the common resource; or
whether the common resource is available at different transmission time-domain positions.

In the above embodiments, the common resource is not limited by the initial time-domain configuration, and a period of the common resource may be flexibly configured using the first information, which improves the flexibility of the period of the common resource.

In combination with some embodiments of the third aspect, in some embodiments, the common resource includes at least one of:
an SSB;
an SIB;
a common PDCCH; or
an RACH.

In the above embodiments, the common resource (e.g., SSB) is not limited by the initial time-domain configuration, and it may be flexibly configured through the first information, which improves the flexibility of time-domain configuration of the common resource. Moreover, the second information indicates a valid transmission time-domain position where the common resource is valid or an invalid transmission time-domain position where the common resource is invalid, which improves the accuracy of monitoring the common resource.

In combination with some embodiments of the third aspect, in some embodiments, the third information is further used to indicate at least one of:
a cell DTX configuration of the first access network device; or
whether the first access network device configures a cell DTX configuration.

In the above embodiments, the first access network device indicates the cell DTX configuration to the second access network device, so that the second access network device may determine the condition of the cell DTX configuration of the first access network device.

In combination with some embodiments of the third aspect, in some embodiments, the third information is used for the second access network device to determine an SMTC.

In the above embodiments, the second access network device determines the SMTC based on the time-domain configuration of the common resource and the DTX configuration of the first access network device, which improves the accuracy of the terminal in neighbor cell measurement.

In a fourth aspect, the embodiments of the disclosure provide an information transmission method. The method is performed by a communication system, and includes:
sending by a first access network device first information to a terminal, in which the first information indicates a first time-domain configuration associated with a common resource, and the first time-domain configuration is different from an initial time-domain configuration associated with the common resource.

In a fifth aspect, the embodiments of the disclosure provide an information transmission apparatus. The apparatus includes:
a transceiver module, configured to send first information to a terminal, in which the first information indicates a first time-domain configuration associated with a common resource, and the first time-domain configuration is different from an initial time-domain configuration associated with the common resource.

In combination with some embodiments of the fifth aspect, in some embodiments, the first information indicates the first time-domain configuration associated with the common resource within at least one time-domain window.

In combination with some embodiments of the fifth aspect, in some embodiments, the transceiver module is further configured to:
send second information to the terminal, in which the second information indicates whether the common resource is valid at different transmission time-domain positions of the common resource, and the transmission time-domain positions of the common resource are configured by the first time-domain configuration.

In combination with some embodiments of the fifth aspect, in some embodiments, the first time-domain configuration includes at least one of:
a period associated with the common resource;
transmission time-domain positions of the common resource; or
whether the common resource is available at different transmission time-domain positions.

In combination with some embodiments of the fifth aspect, in some embodiments, the common resource includes at least one of:
an SSB;
an SIB;
a common PDCCH; or
an RACH.

In combination with some embodiments of the fifth aspect, in some embodiments, the transceiver module is further configured to:
send third information to a second access network device, in which the third information indicates at least one of:
the first time-domain configuration of the common resource; or
whether the common resource is valid at different transmission time-domain positions of the common resource, in which the transmission time-domain positions of the common resource are configured by the first time-domain configuration.

In combination with some embodiments of the fifth aspect, in some embodiments, the third information is further used to indicate at least one of:
a cell DTX configuration of the first access network device; or
whether the first access network device configures a cell DTX configuration.

In combination with some embodiments of the fifth aspect, in some embodiments, the third information is used for the second access network device to determine an SMTC.

In combination with some embodiments of the fifth aspect, in some embodiments, the transceiver module is further configured to: send the first information within a first modification period, in which the first information is valid within a second modification period, a time-domain position of the second modification period is adjacent to a time-domain position of the first modification period, and the time-domain position of the second modification period is after the time-domain position of the first modification period.

In combination with some embodiments of the fifth aspect, in some embodiments, a length of the first modification period and/or a length of the second modification period is equal to N times a length of a cell DRX cycle, and N is a positive integer.

In combination with some embodiments of the fifth aspect, in some embodiments, sending the first information to the terminal includes:
sending paging DCI carrying the first information to the terminal.

In combination with some embodiments of the fifth aspect, in some embodiments, the paging DCI is sent in the first modification period, in which the first modification period is associated with a system message update.

In a sixth aspect, the embodiments of the disclosure provide an information transmission apparatus. The apparatus includes:
a transceiver module, configured to receive first information sent by a first access network device, in which the first information indicates a first time-domain configuration associated with a common resource, and the first time-domain configuration is different from an initial time-domain configuration associated with the common resource.

In combination with some embodiments of the sixth aspect, in some embodiments, the first information indicates the first time-domain configuration associated with the common resource within at least one time-domain window.

In combination with some embodiments of the sixth aspect, in some embodiments, the transceiver module is further configured to:
receive second information sent by the first access network device, in which the second information indicates whether the common resource is valid at different transmission time-domain positions of the common resource, and the transmission time-domain positions of the common resource are configured by the first time-domain configuration.

In combination with some embodiments of the sixth aspect, in some embodiments, the first time-domain configuration includes at least one of:
a period associated with the common resource;
transmission time-domain positions of the common resource; or
whether the common resource is available at different transmission time-domain positions.

In combination with some embodiments of the sixth aspect, in some embodiments, the common resource includes at least one of:
an SSB;
an SIB;
a common PDCCH; or
an RACH.

In combination with some embodiments of the sixth aspect, in some embodiments, the transceiver module is further configured to:
receive the first information within a first modification period, in which the first information is valid within a second modification period, a time-domain position of the second modification period is adjacent to a time-domain position of the first modification period, and the time-domain position of the second modification period is after the time-domain position of the first modification period.

In combination with some embodiments of the sixth aspect, in some embodiments, a length of the first modification period and/or a length of the second modification period is equal to N times a length of a cell DRX cycle, and N is a positive integer.

In combination with some embodiments of the sixth aspect, in some embodiments, the transceiver module is further configured to:
receive paging DCI carrying the first information sent by the first access network device.

In combination with some embodiments of the sixth aspect, in some embodiments, the paging DCI is received within the first modification period.

In a seventh aspect, the embodiments of the disclosure provide an information transmission apparatus. The apparatus includes:
a transceiver module, configured to receive third information sent by a first access network device, in which the third information indicates at least one of:
a first time-domain configuration associated with a common resource associated with the first access network device, in which the first time-domain configuration is different from an initial time-domain configuration associated with the common resource; or
whether the common resource is valid at different transmission time-domain positions of the common resource, in which the transmission time-domain positions of the common resource are configured by the first time-domain configuration.

In combination with some embodiments of the seventh aspect, in some embodiments, the third information indicates the first time-domain configuration associated with the common resource within at least one time-domain window.

In combination with some embodiments of the seventh aspect, in some embodiments, the first time-domain configuration includes at least one of:
a period associated with the common resource;
the transmission time-domain positions of the common resource; or
whether the common resource is valid at different transmission time-domain positions.

In combination with some embodiments of the seventh aspect, in some embodiments, the common resource includes at least one of:
an SSB;
an SIB;
a common PDCCH; or
an RACH.

In combination with some embodiments of the seventh aspect, in some embodiments, the third information is further used to indicate at least one of:
a cell DTX configuration of the first access network device; or
whether the first access network device configures the cell DTX configuration.

In combination with some embodiments of the seventh aspect, in some embodiments, the third information is used for the second access network device to determine an SMTC.

In an eighth aspect, the embodiments of the disclosure provide a communication system. The system includes: a first access network device, a second access network device and a terminal.

The first access network device is configured to implement the information transmission method of the first aspect.

The terminal is configured to implement the information transmission method of the second aspect.

The second access network device is configured to implement the information transmission method of the third aspect.

In a ninth aspect, the embodiments of the disclosure provide a communication device. The communication device includes:
one or more processors;
in which the one or more processors are configured to call instructions to cause the communication device to implement the information transmission method of the first aspect, the information transmission method of the second aspect, or the information transmission method of the third aspect.

In a tenth aspect, the embodiments of the disclosure provide a storage medium. The storage medium stores instructions, and when the instructions are executed by a communication device, the communication device is caused to implement the information transmission method of the first aspect, the information transmission method of the second aspect, or the information transmission method of the third aspect.

It is understood that the above access network device, the terminal, the communication device, the communication system, the storage medium, the program product and the computer program are all used for implementing the methods provided by the embodiments of the disclosure. The beneficial effects they achieve can refer to the beneficial effects in the corresponding methods, which will not be repeated here.

The embodiments of the disclosure provide an information transmission method and an information transmission apparatus, a communication device, a communication system and a storage medium. In some embodiments, terms such as "information transmission method", "information processing method" and "information sending method" are interchangeable. Terms such as "information transmission apparatus", "information processing apparatus" and "information sending apparatus" are interchangeable. Moreover, terms such as "communication system" and "information processing system" are interchangeable.

Not all of the embodiments of the disclosure are provided below, only some embodiments are illustrated in the following as examples and they are not taken as specific limitations on the protection scope of the disclosure. Without contradiction, in an embodiment, each step may be implemented as an independent embodiment, and steps may be combined arbitrarily. For example, the solution after removing some steps in the embodiment may also be implemented as an independent embodiment. The steps in the embodiment may be performed in different orders, and optional implementations in the embodiment may be combined arbitrarily. In addition, the embodiments of the disclosure may also be combined arbitrarily. For example, some or all steps of different embodiments may be combined arbitrarily, and each embodiment may be arbitrarily combined with optional implementations of other embodiments.

In the embodiments of the disclosure, unless there are special explanations and logical conflicts, terms and/or descriptions of the embodiments are consistent and can refer to each other, and technical features in different embodiments may be combined as a new embodiment according to their inherent logical relations.

The terms used in the embodiments of the disclosure are only for the purpose of describing specific embodiments, and are not used as limitations of the disclosure.

In the embodiments of the disclosure, unless otherwise specified, an element expressed in a singular form through "a", "an" "the" "the above", "said", "the above described" or "this", is interpreted as that there is "one and only one", "one or more" or "at least one" of the element. For example, when an article, e.g., "a", "an" or "the" in English, is used in translation, a noun after the article can be interpreted in a singular form or in a plural form.

In the embodiments of the disclosure, "a plurality of" refers to "two or more".

In some embodiments, the terms "at least one of", "one or more", "a plurality of" and "multiple" are interchangeable.

In some embodiments, "at least one of A or B", "A and/or B", "in one case A, while in another case B", and "in response to one case A, while in response to another case B" may be used in the following technical solutions depends on the specific condition: in some embodiments, A is executed independent of B; in some embodiments, B is executed independent of A; in some embodiments, A and B are selectively executed; and in some embodiments, A and B are both executed. The same applies when there are more branches such as A, B and C.

In some embodiments, "A or B" may be used in the following technical solutions depending on the condition: in some embodiments, A is executed independent of B; in some embodiments, B is executed independent of A; and in some embodiments, A and B are selectively executed. The same applies when there are more branches such as A, B and C.

The prefixes such as "first" and "second" in the embodiments of the disclosure are used only to distinguish different objects, and the prefix is not intended to limit the position, order, priority, quantity or content of a certain object. The description of the object can refer to the descriptions of the claims or the embodiments, and should not constitute unnecessary limitations because of the use of prefix. For example, when describing a "field", the prefixes "first" and "second" in "first field" and "second field" do not indicate the positions or orders of the two fields or whether the "first field" and "second field" are in the same message or not, nor do they define the sequence of the "first field" and "second field". For another example, when describing a "level", the prefixes "first" and "second" in "first level" and "second level" do not limit the priorities of the levels. Moreover, an ordinal number used to describe an object does not indicate a quantity of the object, and there may be one or more of such object. Taking "first device" as an example, there may be one or more "first devices". In addition, objects with different prefixes may refer to the same object or different objects. For example, when describing a "device", "first device" and "second device" may refer to the same device or different devices, or may refer to the same device type or different device types. When describing "information", "first information" and "second information" may refer to the same information or different information, or may refer to the same content or different contents.

In some embodiments, "comprising A", "containing A", "used to indicate A" and "carrying A" may be interpreted as "directly carrying A" or "indirectly indicating A".

In some embodiments, terms such as "time/frequency" and "time-frequency domain" refer to time domain and/or frequency domain.

In some embodiments, terms "in response to", "in response to determining", "in the case of", "when", "while", "if" and "assuming" are interchangeable.

In some embodiments, terms "greater than", "greater than or equal to", "more than" "more than or equal to", "higher than", "higher than or equal to", "no less than", "no lower than" and "above" are interchangeable. Moreover, the terms "less than", "less than or equal to", "lower than", "lower than or equal to", "smaller than", "smaller than or equal to", "no greater than", "no higher than" and "below" are interchangeable.

In some embodiments, the apparatus may be interpreted as physical or virtual, and its name is not limited to those listed in the embodiments. Terms "apparatus", "equipment", "device", "circuit", "network element", "node", "function", "unit", "section", "system", "network", "chip", "chip system", "entity" and "body" are interchangeable.

In some embodiments, "network" may be interpreted as a device included in the network, such as an access network device and a core network device.

In some embodiments, terms "access network (AN) device", "radio AN (RAN) device", "base station (BS)", "radio BS", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier" and "bandwidth part (BWP)" are interchangeable.

In some embodiments, terms "terminal", "terminal device", "UE", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client" and "client" are interchangeable.

In some embodiments, "AN device", "core network device" or "network device" may be replaced by "terminal". For example, the embodiments of the disclosure are applied to a structure in which communications between an AN device, a core network device or a network device and a terminal are replaced by communications between a plurality of terminals (for example, device-to-device (D2D) communications and vehicle-to-everything (V2X) communications). In this case, the terminal may have all or part of the functions of the AN device. In addition, terms such as "uplink" and "downlink" may also be replaced by terms corresponding to communications between terminals, such as "side". For example, "uplink channel" and "downlink channel" may be replaced by "side channel", and "uplink" and "downlink" may be replaced by "side link".

In some embodiments, when "terminal" is replaced by "AN device", "core network device" or "network device", the AN device, the core network device or the network device may have all or part of the functions of the terminal.

In some embodiments, data and information are obtained by means comply with the laws and regulations of the host country.

In some embodiments, data and information are obtained with the consent of users.

In addition, each element, row or column in the tables of the embodiments of the disclosure may be implemented as an independent embodiment, or any combination of elements, rows and columns may be implemented as an independent embodiment.

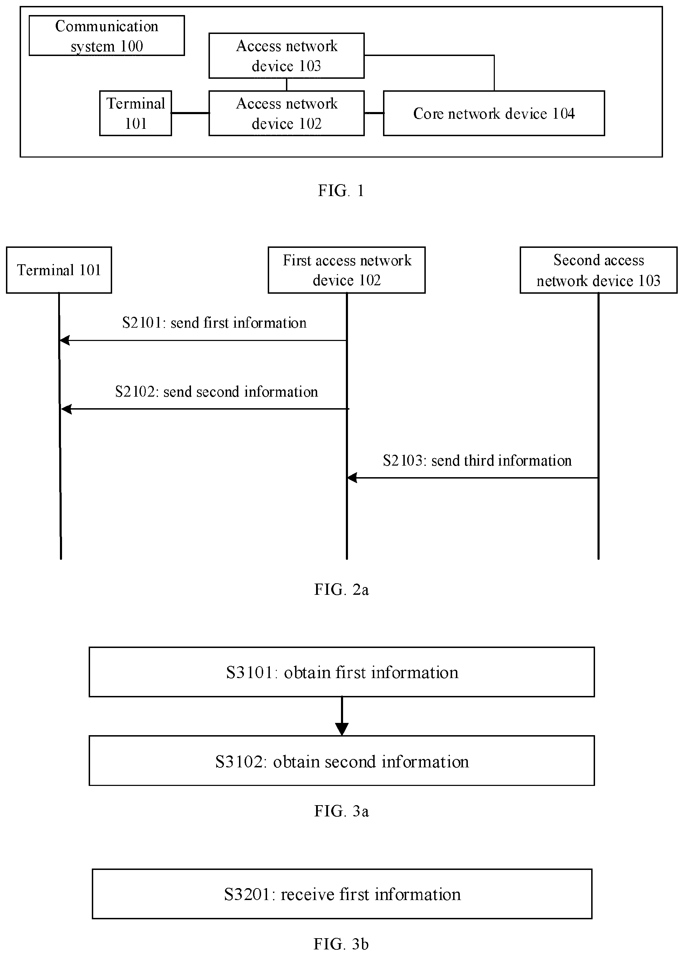

FIG. 1 is a schematic structural diagram of a communication system illustrated according to an embodiment of the disclosure.

As illustrated in FIG. 1, the communication system 100 includes a terminal 101, a first AN device 102 and a second AN device 103.

In some embodiments, the terminal 101 includes at least one of a mobile phone, a wearable device, an Internet of Things (IoT) device, a car with communication functions, a smart car, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city or a wireless terminal in smart home, which is not limited thereto.

In some embodiments, the first AN device 102 or the second AN device 103 may be a node or a device that connects the terminal to a wireless network. The AN device includes at least one of an evolved Node B (eNB) in 5G, a next generation eNB (ng-eNB), a next generation NodeB (gNB), a NodeB (NB), a home NB (HNB), a home eNB (HeNB), a wireless backhaul equipment, a radio network controller (RNC), a BS controller (BSC), a base transceiver station (BTS), a base band unit (BBU), a mobile switching center, a BS in a 6th generation (6G) communication system, an Open RAN, a Cloud RAN, a BS in other communication systems, or an access node in a wireless fidelity (Wi-Fi) system, which is not limited thereto.

In some embodiments, the technical solution of the disclosure is applied to the Open RAN. In this case, interfaces between AN devices or interfaces within an AN device involved in the embodiments of the disclosure may be used as internal interfaces of the Open RAN. The procedures and information interactions between these internal interfaces are implemented by software or programs.

In some embodiments, the AN device is composed of a central unit (CU) and distributed units (DUs), and "CU" may also be the abbreviation of control unit. The use of CU-DU structure allows to divide a protocol layer of the AN device, such that some functions of the protocol layer are placed in the CU for centralized control, and some or all of the remaining functions of the protocol layer are distributed in the DUs that are centrally controlled by the CU, which is not limited thereto.

In some embodiments, the network device further includes a core network device 104, which includes at least one of an evolved packet core (EPC), a 5G core network (CN) or a next generation core (NGC).

It is understandable that to clearly illustrate the technical solution of the embodiments of the disclosure, its applicable communication system is introduced first in the embodiments of the disclosure, which does not constitute as a limitation on the technical solution provided by the embodiments of the disclosure. Those skilled in the art understand that as system architectures evolve and new business scenarios emerge, the technical solution provided by the embodiments of the disclosure is also applicable to similar technical problems.

The following embodiments of the disclosure are applied to the entire or a portion of the communication system 100 shown in FIG. 1, which is not limited herein. The entities shown in FIG. 1 are examples. The communication system may include all or part of the entities in FIG. 1, and may also include entities not shown in FIG. 1. The quantities and forms of these entities are arbitrary, and the connection relationships between these entities are illustrated as examples. The entities may or may not be connected, and the entities may be connected by any means, e.g., directly or indirectly, or in a wired manner or wirelessly.

The embodiments of the disclosure may be applied to a long-term evolution (LTE) system, an LTE-Advanced (LTE-A) system, an LTE-Beyond (LTE-B) system, a SUPER 3G system, an IMT-Advanced system, a 4th generation (4G) mobile communication system, a 5G system, a 5G new radio (NR) system, a future radio access (FRA) system, a new-radio access technology (RAT) system, a NR system, a new radio access (NX) system, a future generation radio access (FX) system, a global system for mobile communications (GSM (registered trademark)), a CDMA2000, an ultra mobile broadband (UMB), an IEEE 802.11(Wi-Fi (registered trademark)), an IEEE 802.16 (WiMAX (registered trademark)), an IEEE 802.20, an ultra-wideband (UWB), a Bluetooth (registered trademark), a public land mobile network (PLMN), a D2D system, a machine-to-machine (M2M) system, an IoT system, a V2X system, systems using other information transmission methods or their next generation systems. In addition, the above systems may be combined for applications, such as a combination of the LTE/LTE-A system and 5G.

In 3rd generation partnership project (3GPP) Release 15 (R15), after applying 5G technologies, the energy consumption of 5G BS becomes four times that of an LTE BS, which makes network energy saving is an important means for operators to reduce an operating cost of 5G system.

In 3GPP R16, wake up signal (WUS) is applied to save energy for radio resource control (RRC)-connected UE. An offset before a UE connected discontinuous reception (C-DRX)'s on duration period defines a monitoring duration for sending the WUS, during which the WUS (i.e., DCI 2-6) is sent. By scrambling it with a power saving radio network temporary identity (PS-RNTI), it indicates whether the UE wakes up to monitor a PDCCH in the next UE C-DRX on duration.

In 3GPP R17, paging WUS is applied to save energy for RRC idle/RRC inactive UE. That is, start from a certain time before a paging occasion (PO), the paging WUS (i.e., paging early indication (PEI)) is sent to indicate whether the UE shall monitor paging scheduling information at the PO. The PEI is DCI 2-7, which is scrambled by a paging early indication radio network temporary identity (PEI-RNTI).

In 3GPP R18, in order to reduce network energy consumption, it starts a network energy saving (NES) scheme. The four NES functions supported by the specification are as follows:
SSB-less secondary cell (SCell);
cell DTX/DRX;
antenna port adaptation; and
PDSCH transmission power adaptation.

In network energy saving, how to schedule the common resource is a problem to be solved urgently.

FIG. 2a is an interactive schematic diagram of an information transmission method illustrated according to an embodiment of the disclosure. As illustrated in FIG. 2a, the embodiment of the disclosure provides an information transmission method. The method is applied to the communication system 100, and includes the following steps.

At step S2101, the first AN device sends first information.

In some embodiments, the first AN device sends the first information to the terminal.

In some embodiments, the first information indicates a first time-domain configuration of a common resource.

In some embodiments, the first time-domain configuration is different from an initial time-domain configuration associated with the common resource.

In some embodiments, the common resource may be a resource shared by terminals within a signal coverage of the first AN device.

In some embodiments, the common resource may be a resource shared by terminals within a signal coverage of the first AN device.

In some embodiments, the common resource includes at least one of:
a common signal; or
a common channel resource.

In some embodiments, the common resource may be the common signal that can be received by terminals within the signal coverage of the first AN device.

In some embodiments, the common resource may be the common channel resource for terminals within the signal coverage of the first AN device to receive and/or send signals.

In some embodiments, the first information is carried in broadcast information or a dedicated signaling.

In some embodiments, the first information is carried in paging DCI. In some embodiments, the common resource includes at least one of:
an SSB;
an SIB;
a common PDCCH; or
an RACH.

In some embodiments, the SIB may be any SIB, such as an SIB1, an SIB2 and an SIB3, which is not limited herein.

In some embodiments, the first time-domain configuration includes at least one of:
a period associated with the common resource;
transmission time-domain positions of the common resource; or
whether the common resource is valid at different transmission time-domain positions.

In some embodiments, a period associated with the SIB may include any one or more periods of SIB1-SIB9.

In some embodiments, a period associated with the common PDCCH may include a configuration period of a common PDCCH search space.

In some embodiments, the RACH may include at least one of:
a PRACH occasion (RO) association period;
a PRACH configuration period (or PRACH period); or
a PRACH association period.

In some embodiments, the PRACH association period includes at least one PRACH configuration period.

In some embodiments, the common resource further includes paging information.

In some embodiments, the paging information includes at least one of: paging scheduling information (e.g., paging DCI) or a paging message.

In some embodiments, a period of the paging information includes, but is not limited to, a period of a Paging Occasion (PO).

In some embodiments, the first AN device may broadcast the initial time-domain configuration in a system message.

In some embodiments, the initial time-domain configuration associated with the common resource is specified by a communication protocol.

In some embodiments, the first AN device indicates the first time-domain configuration to the terminal using the first information.

In some embodiments, the first AN device determines the first time-domain configuration based on associated service requirements of the first AN device.

In some embodiments, the first AN device determines that an associated traffic volume of the first AN device is less than a preset value, and increases a period of the common resource.

In some embodiments, increasing the period of the common resource includes increasing a duration of a transmission interval of the common resource.

In some embodiments, the first AN device determines the first time-domain configuration based on a cell DRX/DTX status of the first AN device.

In some embodiments, the first AN device determines that it is in a cell DRX/DTX on duration, and reduces a duration of the period of the common resource.

In some embodiments, the first AN device determines that it is in a cell DRX/DTX dormant cycle, and increases the duration of the period of the common resource.

In some embodiments, the first AN device determines the first time-domain configuration based on the associated service requirements of the first AN device and/or the cell DRX/DTX status of the first AN device, and sends the first information to the terminal.

In some embodiments, the first information may be triggered by the first AN device based on the associated service requirements of the first AN device and/or the cell DRX/DTX status of the first AN device.

In some embodiments, the first information may be sent periodically.

In some embodiments, the first information indicates the first time-domain configuration associated with the common resource within at least one time-domain window.

In some embodiments, the first time-domain configurations within different time-domain windows may be determined based on any of the following:
service requirements of the first AN device in different periods; and
cell DRX/DTX enabling statuses of the first AN device in different periods.

In some embodiments, the first time-domain configurations are different within different time-domain windows.

In some embodiments, time-domain positions within different time-domain windows are determined based on at least one of:
historical service requirements; or
historical cell DRX/DTX enabling statuses.

In some embodiments, the first information indicates a first time-domain configuration associated with the common resource within a plurality of time-domain windows.

The duration of the time-domain window is not limited in the embodiment.

In some embodiments, the first AN device sends the first information within a first modification period.

In some embodiments, the first information is valid within a second modification period.

In some embodiments, the time-domain position of the second modification period is adjacent to the time-domain position of the first modification period, and the time-domain position of the second modification period is after the time-domain position of the first modification period.

In some embodiments, the first AN device sends the first information to the terminal in the first modification period, and the first time-domain configuration indicated by the first information is valid in the adjacent second modification period after the first modification period.

In some embodiments, a length of the first modification period and/or a length of the second modification period is equal to N times oa length of a cell DRX cycle, where N is a positive integer.

For example, the first AN device indicates the first time-domain configuration to the terminal using the first information within a modification period m, modification period m=modificationPeriodCoeff*defaultPagingCycle. The modificationPeriodCoeff includes: a modification period changed by system broadcast, or a newly configured coefficient of common resource self-adaption. The defaultPagingCycle is a cell DRX cycle.

In some embodiments, the first AN device sends paging DCI carrying the first information to the terminal.

In some embodiments, the terminal is in an RRC idle state or an RRC inactive state, and the first AN device sends the paging DCI carrying the first information to the terminal.

In some embodiments, the terminal in the RRC idle state or the RRC inactive state uses the common resource based on the first time-domain configuration.

In some embodiments, the paging DCI is sent within the first modification period. The first modification period is associated with a system message update.

In some embodiments, the same system message may be valid within an entire modification period.

In some embodiments, the system message is changed by taking a modification period as a time granularity.

In some embodiments, the first AN device sends the paging DCI to the terminal in the first modification period, and the first time-domain configuration indicated by the paging DCI is valid in the adjacent second modification period after the first modification period.

At step S2102, the first AN device sends second information.

In some embodiments, the first AN device sends the second information to the terminal.

In some embodiments, the second information indicates whether the common resource is valid at different transmission time-domain positions.

In some embodiments, the transmission time-domain positions of the common resource are configured by the first time-domain configuration.

In some embodiments, whether the common resource is valid at the transmission time-domain position includes at least one of:
whether the common signal is sent at the transmission time-domain position; or
whether the common channel resource is valid at the transmission time-domain position.

In some embodiments, the first time-domain configuration configures the period of the common resource, i.e., configures the transmission time-domain positions of the common resource.

In some embodiments, the second information may include a bitmap.

In some embodiments, each bit in the bitmap may correspond to a transmission time-domain position, and a value of the bit indicates whether the common resource is valid at the corresponding transmission time-domain position or not.

In some embodiments, if the value of the bit corresponding to the transmission time-domain position is "1", it indicates that the common resource is valid at the transmission time-domain position.

In some embodiments, if the value of the bit corresponding to the transmission time-domain position is "0", it indicates that the common resource is invalid at the transmission time-domain position.

In some embodiments, different common resources may correspond to different bitmaps.

In some embodiments, different common resource may correspond to the same bitmap.

In some embodiments, the second information indicates the first AN device to send the SSB at the transmission time-domain location.

In some embodiments, the second information indicates the first AN device to not send the SSB at the transmission time-domain location.

In some embodiments, the second information indicates the first AN device to send any one or more of SIB1-SIB9 at the transmission time-domain position.

In some embodiments, the second information indicates the first AN device to not send any one or more of SIB1-SIB9 at the transmission time-domain position.

In some embodiments, the second information indicates whether there is a PO at the transmission time-domain position.

In some embodiments, the second information indicates whether there is a PO at the transmission time-domain positions within the PRACH configuration period.

In some embodiments, the second information indicates whether there is a PO at the transmission time-domain positions within the PRACH association period.

In some embodiments, the first information and the second information may be different information.

In some embodiments, the first information and the second information may be the same information.

At step S2103, the first AN device sends third information.

In some embodiments, the first AN device sends the third information to the second AN device.

In some embodiments, the first AN device and the second AN device are different BSs.

In some embodiments, a cell within the signal coverage of the first AN device is a neighbor cell of a cell within the signal coverage of the second AN device.

In some embodiments, the third information indicates at least one of:
the first time-domain configuration of the common resource; or
whether the common resource is valid at different transmission time-domain positions, in which the transmission time-domain positions of the common resource are configured by the first time-domain configuration.

In some embodiments, the first time-domain configuration indicated by the third information is similar to the first time-domain configuration indicated by the first information, which will not be repeated here.

In some embodiments, the content and the manner in which the third information indicates whether the common resource is valid at different transmission time-domain positions are similar to the content and the manner in which the first information indicates whether the common resource is valid at different transmission time-domain positions, which will not be repeated here.

In some embodiments, the third information is used for the second AN device to determine an SMTC.

In some embodiments, the second AN device determines the SMTC based on the first time-domain configuration of the common resource and/or the valid transmission time-domain positions of the common resource or the invalid transmission time-domain positions of the common resource.

In some embodiments, the SMTC is used for the terminal that uses the second AN device as a serving AN device to perform a neighbor cell SSB measurement on the cell within the signal coverage of the first AN device.

In some embodiments, the neighbor cell SSB measurement is at least used for the terminal that uses the second AN device as the serving AN device to perform at least one of: cell selection or cell reselection.

In some embodiments, the third information is further used to indicate at least one of:
a cell DTX configuration of the first AN device; or
whether the first AN device configures the cell DTX configuration.

In some embodiments, the first AN device configures the cell DTX configuration, including: the first AN device enabling the cell DTX configuration.

In some embodiments, the second AN device determines the SMTC based on the cell DTX configuration of the first AN device and/or whether the first AN device configures the cell DTX configuration.

In some embodiments, the SMTC is used for the terminal that uses the second AN device as the serving AN device to perform the neighbor cell SSB measurement on the cell within the signal coverage of the first AN device.

In some embodiments, the neighbor cell SSB measurement is at least used for the terminal that uses the second AN device as the serving AN device to perform at least one of: cell selection or cell reselection.

In some embodiments, for a first cell, the third information indicates at least one of:
the first time-domain configuration of the common resource; or
whether the common resource is valid at different transmission time-domain positions, in which the transmission time-domain positions of the common resource are configured by the first time-domain configuration.

In some embodiments, the first AN device determines an SMTC of a second cell based on the third information. The second cell is a neighbor cell of the first cell. The first cell and the second cell are cells within the signal coverage of the first AN device. In some embodiments, the first AN device sending the third information, including: the first AN device sending the third information to an entity for determining the SMTC of the second cell.

In some implementations, the entity for determining the SMTC of the second cell may be implemented by hardware and/or software.

In some embodiments, terms such as "information", "message", "signal", "signaling", "report", "configuration", "indication", "instruction", "command", "channel", "parameter", "field" and "data" are interchangeable.

In some embodiments, terms such as "send", "launch", "report" and "transmit" are interchangeable.

The information transmission method according to the embodiments of the disclosure includes at least one of step S2101-step S2103. For example, step S2101 may be implemented as an independent embodiment, step S2102 may be implemented as an independent embodiment, and step S2103 may be implemented as an independent embodiment. For example, step S2101 may be combined with step S2103 and implemented as an independent embodiment, which is not limited here.

In some embodiments, step S2101 and step S2102 may be performed in a reverse order or simultaneously.

In some embodiments, step S2103 is optional, and one or more of these steps may be omitted or replaced in different embodiments.

In the embodiments of the disclosure, some or all of the steps and their optional implementations may be arbitrarily combined with some or all of the steps in other embodiments, or may be arbitrarily combined with optional implementations of other embodiments.

FIG. 3a is a schematic flowchart of an information transmission method illustrated according to an embodiment of the disclosure. As illustrated in FIG. 3a, the embodiment of the disclosure provides an information transmission method. The method is performed by the terminal 101 (which is a type-1 terminal), and includes the following steps.

At step S3101, first information is obtained.

In some embodiments, the optional implementations of step S3101 may refer to the optional implementations of step S2101 in FIG. 2a, and other related parts in the embodiment involved in FIG. 2a, which will not be repeated here.

In some embodiments, the terminal receives the first information sent by a network device or other devices, which is not limited herein.

In some embodiments, the terminal obtains the first information specified by a protocol.

In some embodiments, the terminal obtains the first information from an upper layer or upper layers.

In some embodiments, the terminal obtains the first information through processing.

In some embodiments, step S3101 is omitted, and the terminal autonomously realizes a function indicated by the first information or a default function.

At step S3102, second information is obtained.

In some embodiments, the optional implementations of step S3102 may refer to the optional implementations of step S2102 in FIG. 2a, and other related parts in the embodiment involved in FIG. 2a, which will not be repeated here.

In some embodiments, the terminal receives the first information sent by the first AN device or other devices, which is not limited herein.

In some embodiments, the terminal obtains the first information specified by the protocol.

In some embodiments, the terminal obtains the first information from the upper layer or the upper layers.

In some embodiments, the terminal obtains the first information through processing.

In some embodiments, step S3102 is omitted, and the terminal autonomously realizes the function indicated by the first information or the default function.

The information transmission method according to the embodiments of the disclosure may include at least one of step S3101-step S3102. For example, step S3101 may be implemented as an independent embodiment, step S3102 may be implemented as an independent embodiment, and step S3101 may be combined with step S3102 and implemented as an independent embodiment, which is not limited herein.

In some embodiments, step S3101 and step S3102 may be performed in a reverse order or simultaneously.

In some embodiments, step S3102 is optional, and one or more of these steps may be omitted or replaced in different embodiments.

In the embodiments of the disclosure, some or all of the steps and their optional implementations may be arbitrarily combined with some or all of the steps in other embodiments, or may be arbitrarily combined with optional implementations of other embodiments.

FIG. 3b is a schematic flowchart of an information transmission method illustrated according to an embodiment of the disclosure. As illustrated in FIG. 3b, the embodiment of the disclosure provides an information transmission method. The method is performed by the terminal 101, and includes the following steps.

At step S3201, first information is received.

In some embodiments, the first information indicates a first time-domain configuration of a common resource.

In some embodiments, the first time-domain configuration is different from an initial time-domain configuration associated with the common resource.

In some embodiments, the first information indicates the first time-domain configuration associated with the common resource within at least one time-domain window.

In some embodiments, the method includes:
receiving second information sent by the first AN device, in which the second information indicates whether the common resource is valid at different transmission time-domain positions, and the transmission time-domain positions of the common resource are configured by the first time-domain configuration.

In some embodiments, the first time-domain configuration includes at least one of:
a period associated with the common resource;
the transmission time-domain positions of the common resource; or
whether the common resource is valid at different transmission time-domain positions.

In some embodiments, the common resource includes at least one of:
an SSB;
an SIB;
a common PDCCH; or
an RACH.

In some embodiments, receiving the first information sent by the first AN device, includes:
receiving the first information within a first modification period, in which the first information is valid within a second modification period, a time-domain position of the second modification period is adjacent to a time-domain position of the first modification period, and the time-domain position of the second modification period is after the time-domain position of the first modification period.

In some embodiments, a length of the first modification period and/or a length of the second modification period is equal to N times a length of a cell DRX period, where N is a positive integer.

In some embodiments, receiving the first information sent by the first AN device, includes:
receiving paging DCI carrying the first information sent by the first AN device.

In some embodiments, the paging DCI is received within the first modification period.

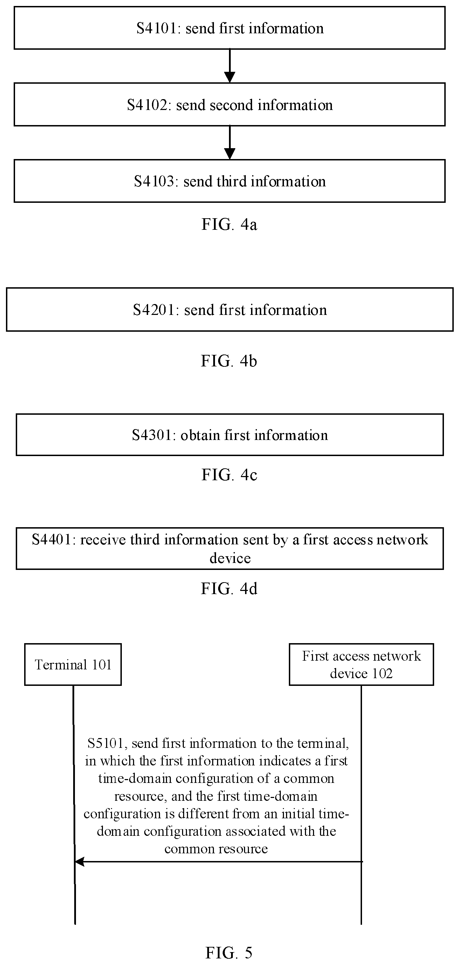

FIG. 4a is a schematic flowchart of an information transmission method illustrated according to an embodiment of the disclosure. As illustrated in FIG. 4a, the embodiment of the disclosure provides an information transmission method. The method is performed by the first AN device 102, and includes the following steps.

At step S4101, first information is sent.

In some embodiments, the optional implementations of step S4101 may refer to the optional implementations of step S2101 in FIG. 2a, and other related parts in the embodiment involved in FIG. 2a, which will not be repeated here.

At step S4102, second information is sent.

In some embodiments, the optional implementations of step S4102 can refer to the optional implementations of step S2102 in FIG. 2a, and other related parts in the embodiment involved in FIG. 2a, which will not be repeated here.

At step S4103, third information is sent.

In some embodiments, the optional implementations of step S4103 can refer to the optional implementations of step S2103 in FIG. 2a, and other related parts in the embodiment involved in FIG. 2a, which will not be repeated here.

The information transmission method according to the embodiments of the disclosure may include at least one of step S4101-step S4203. For example, step 4101 may be implemented as an independent embodiment, step S4103 may be implemented as an independent embodiment, and step S4201 may be combined with step S4103 and implemented as an independent embodiment, which is not limited here.

FIG. 4b is a schematic flowchart of an information transmission method illustrated according to an embodiment of the disclosure. As illustrated in FIG. 4b, the embodiment of the disclosure involves in an information transmission method. The method is performed by the first AN device 102, and includes the following steps.

At step S4201, first information is sent.

In some embodiments, the first AN device sends the first information to a terminal.

In some embodiments, the first information indicates a first time-domain configuration of a common resource, in which the first time-domain configuration is different from an initial time-domain configuration associated with the common resource.

In some embodiments, the first information indicates the first time-domain configuration associated with the common resource within at least one time-domain window.

In some embodiments, the method includes:

sending second information to the terminal, in which the second information indicates whether the common resource is valid at different transmission time-domain positions, and the transmission time-domain positions of the common resource are configured by the first time-domain configuration.

In some embodiments, the first time-domain configuration includes at least one of:
a period associated with the common resource;
the transmission time-domain positions of the common resource; or
whether the common resource is available at different transmission time-domain positions.

In some embodiments, the common resource includes at least one of:
an SSB;
an SIB;
a common PDCCH; or
an RACH.

In some embodiments, the method includes:
sending third information to a second AN device, in which the third information indicates at least one of:
the first time-domain configuration of the common resource; or
whether the common resource is valid at different transmission time-domain positions, in which the transmission time-domain positions of the common resource are configured by the first time-domain configuration.

In some embodiments, the third information is further used to indicate at least one of:
a cell DTX configuration of the first AN device; or
whether the first AN device configures the cell DTX configuration.

In some embodiments, the third information is used for the second AN device to determine an SMTC.

In some embodiments, sending the first information includes: sending the first information within a first modification period, in which the first information is valid within a second modification period, a time-domain position of the second modification period is adjacent to a time-domain position of the first modification period, and the time-domain position of the second modification period is after the time-domain position of the first modification period..

In some embodiments, a length of the first modification period and/or a length of the second modification period is equal to N times a length of a cell DRX period, where N is a positive integer.

In some embodiments, sending the first information to the terminal, includes:
sending paging DCI carrying the first information to the terminal.

In some embodiments, the paging DCI is sent in the first modification period, in which the first modification period is associated with a system message update.

FIG. 4c is a schematic flowchart of an information transmission method illustrated according to an embodiment of the disclosure. As illustrated in FIG. 4c, the embodiment of the disclosure involves in an information transmission method. The method is performed by the second AN device 103, and includes the following steps.

At step S4301, first information is obtained.

In some embodiments, the optional implementations of step S4301 can refer to the optional implementations of step S2103 in FIG. 2a, and other related parts in the embodiment involved in FIG. 2a, which will not be repeated here.

In some embodiments, the second AN device receives the first information sent by a first AN device or other devices, which is not limited herein.

In some embodiments, the second AN device obtains the first information specified by a protocol.

In some embodiments, the terminal obtains the first information from an upper layer or upper layers.

In some embodiments, the terminal obtains the first information through processing.

In some embodiments, step S4301 is omitted, and the second AN device autonomously realizes a function indicated by the first information or a default function.

FIG. 4d is a schematic flowchart of an information transmission method illustrated according to an embodiment of the disclosure. As illustrated in FIG. 4d, the embodiment of the disclosure involves in an information transmission method. The method is performed by the second AN device 103, and includes the following steps.

At step S4401, third information sent by a first AN device is received.

In some embodiments, the third information indicates at least one of:
a first time-domain configuration of a common resource associated with the first AN device,
in which the first time-domain configuration is different from an initial time-domain configuration associated with the common resource; or
whether the common resource is valid at different transmission time-domain positions, in which the transmission time-domain positions of the common resource are configured by the first time-domain configuration.

In some embodiments, the third information indicates the first time-domain configuration associated with the common resource within at least one time-domain window.

In some embodiments, the first time-domain configuration includes at least one of:
a period associated with the common resource;
the transmission time-domain positions of the common resource; or
whether the common resource is valid at different transmission time-domain positions.

In some embodiments, the common resource includes at least one of:
an SSB; an SIB; a common PDCCH; or an RACH.

In some embodiments, the third information is further used to indicate at least one of:
a cell DTX configuration of the first AN device; or
whether the first AN device configures the cell DTX configuration.

In some embodiments, the third information is used for the second AN device to determine an SMTC.

FIG. 5 is an interactive schematic diagram of an information transmission method illustrated according to an embodiment of the disclosure. As illustrated in FIG. 5, the embodiment of the disclosure involves in an information transmission method. The method is applied to the communication system 100, and includes one of the following steps.

At step S5101, the first AN device sends first information to the terminal, in which the first information indicates a first time-domain configuration of a common resource, and the first time-domain configuration is different from an initial time-domain configuration associated with the common resource.

The optional implementations of step S5101 can refer to step S2101 of FIG. 2a, step S3101 of FIG. 3a, step S3201 of FIG. 3b, step S4101 of FIG. 4a, step S4201 of FIG. 4b, and other relevant parts of the embodiments involved in FIG. 2a, FIG. 3a, FIG. 3b, FIG. 4a, FIG. 4b, FIG. 4c and FIG. 4d, which will not be repeated here.

In some embodiments, the above method may include the method embodiments performed by the communication system, the terminal, the AN device and the CN device, which will not be repeated here.

Specific options are provided below in combination with any of the above embodiments.

### Option 1: common channel and/or signal (common resource) dynamic adaptive period.

The network side notifies a new transmission mode for the common channel and/or signal using the paging DCI, the transmission mode may be a period, a transmission occasion pattern, etc. The common channel and/or signal may include: SSB, SIB1 or other SIBs, paging, common PDCCH, RACH resources, etc.

For the SSB, the period is an SSB period. For the SIB1, the period is an SIB1 period. For the common PDCCH, the period is a search space configuration period. For the RACH, the period is an RO association period and/or an RACH period.

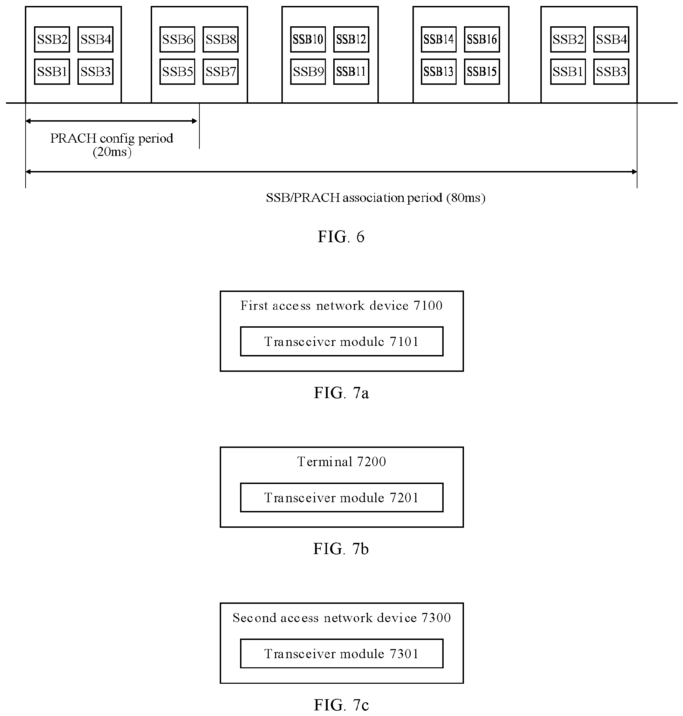

In some embodiments, the RO association period and/or the RACH period (or RACH configuration period) are shown in FIG. 6.

For the SSB or the SIB1, the transmission occasion pattern indicates at which transmission occasions transmission is performed and at which transmission occasions transmission is not performed whihin a modification period. Whether transmission is performed is indicated by a bitmap. For example, each bit corresponds to a transmission occasion, if the bit is "1", it indicates that transmission is performed at the corresponding transmission occasion, and if the bit is "0", it indicates that transmission is not performed at the corresponding transmission occasion. For the RACH, each bit indicates an RO association period or an RACH period, if the bit is "1", it indicates that an RO corresponding to the period exists, otherwise, it indicates that the RO corresponding to the period is cancelled.

The network side informs the terminal of the new transmission mode within a modification period m (i.e., modification period m=modificationPeriodCoeff*defaultPagingCycle), and starts to use the new transmission mode at the boundary of the next modification period. The modificationPeriodCoeff may be a modification period changed by system broadcast change, or a newly configured coefficient for the common channel and/or signal. The defaultPagingCycle is a cell DRX cycle.

### Option 2: common channel and/or signal semi-static adaptive period.

The network side configures a common channel in a window. The transmission occasion pattern may be a transmission pattern within the window.

For the SSB or the SIB1, the transmission occasion pattern indicates at which transmission occasion transmission is performed and at which transmission occasion transmission is not performed in the window. Whether transmission is performed is indicated by a bitmap. For example, each bit corresponds to a transmission occasion, if the bit is "1", it indicates that transmission is performed at the corresponding transmission occasion, and if the bit is "0", it indicates that transmission is not performed at the corresponding transmission occasion. For the RACH, each bit indicates an RO association period or an RACH period, if the bit is "1", it indicates that an RO corresponding to the period exists, otherwise, it indicates that the RO corresponding to the period is cancelled.

### Option 3: common channel and/or signal dynamic adaption's influence on a neighbor cell.

For SSB configuration, the neighbor cell will configure an SMTC per frequency according to a period of the SSB to inform terminals residing in a local cell to perform a neighbor cell SSB measurement and perform cell selection and/or reselection. If a transmission period or a transmission occasion pattern of SSB changes, it will affect the neighbor cell measurement and cell reselection of the terminal.

Case 1: If SSB configuration changes, it informs the neighbor cell of the new SSB configuration, such as a changed period and a changed transmission occasion pattern. The neighbor cell reconfigures an appropriate SMTC for the terminal and/or an SSB transmission pattern per PCI according to the configuration.

Case 2: If the cell DTX is configured or deconfigured, the neighbor cell should also be informed of the cell DTX that is configured or diconfigured, so that the neighbor cell will reconfigure an appropriate SMTC for the terminal and/or cell DTX per PCI according to the configuration.

The embodiments of the disclosure provide an apparatus for implementing any of the above methods, and the apparatus includes units/modules for implementing steps performed by the terminal in any of the above methods. The embodiments of the disclosure also provide another apparatus including units/modules for implementing steps performed by the network device (e.g., AN device, CN function node, CN device, etc.) in any of the above methods.

It should be understood that the units/modules in the above apparatus are divided based on their logical functions, and some or all of the above units/modules may be integrated on a single physical entity or may be physically separated in practical applications. In addition, the units/modules in the above apparatus may be implemented by software called by a processor. For example, the apparatus includes a processor, which is connected to a memory. The memory stores instructions, and the processor calls the instructions stored in the memory to implement any of the above methods or to implement functions of the units/modules in the above apparatus. The processor may be a general-purpose processor, such as a central processing unit (CPU) or a micro-processor, and the memory is a memory in the apparatus or a memory external to the apparatus. The units/modules in the apparatus may be implemented in the form of a hardware circuit. Some or all of the functions of the units/modules may be achieved through the design of the hardware circuit. The hardware circuit may be understood as one or more processors. For example, in an implementation, the hardware circuit is an application-specific integrated circuit (ASIC). Or, some or all of the functions of the units/modules are achieved through the design of logical relationship between components in the circuit. As another example, in another implementation, the hardware circuit may be implemented through a programmable logic device (PLD). Taking a field programmable gate array (FPGA) as an example, a large number of logical gates are included in the FPGA, and their connection relationships are configured through a configuration file, thereby implementing some or all of the functions of the above units/modules. All the units/modules of the above apparatus may be implemented entirely through the software called by the processor, or entirely through the hardware circuit, or partially through the software called by the processor and partially through the hardware circuit.

In the embodiments of the disclosure, the processor is a circuit having signal processing capabilities. In an implementation, the processor may be a circuit having instruction reading and executing capabilities, such as a CPU, a micro-processor, a graphics processing unit (GPU) (which is understood as a micro-processor), or a digital signal processor (DSP). In another implementation, the processor implements certain functions through a logical relationship of the hardware circuit, which may be fixed or re-configurable. For example, the processor may be a hardware circuit implemented by an ASIC or a PLD, such as an FPGA. In a re-configurable hardware circuit, the procedure for the processor to load the configuration file to configure the hardware circuit is understood as a procedure for the processor to load instructions to implement some or all of the functions of the above units/modules. In addition, the processor may also be an artificial intelligence (AI)-designed hardware circuit, which is understood as an ASIC, such as a neural network processing unit (NPU), a tensor processing unit (TPU) and a deep learning processing unit (DPU).

FIG. 7a is a schematic structural diagram of a first AN device provided by an embodiment of the disclosure. As illustrated in FIG. 7a, the first AN device 7100 includes a transceiver module 7101. In some embodiments, the transceiver module 7101 is configured to: send first information to a terminal, in which the first information indicates a first time-domain configuration associated with a common resource, and the first time-domain configuration is different from an initial time-domain configuration associated with the common resource. Optionally, the transceiver module is used to perform at least one of the communication steps (such as step S2102 and step S2103, but are not limited thereto) such as transmission and/or reception performed by the first AN device 101 in any of the above methods, which will not be repeated here.

FIG. 7b is a schematic structural diagram of a terminal provided by an embodiment of the disclosure. As illustrated in FIG. 7b, the terminal 7200 includes: a transceiver module 7201. In some embodiments, the transceiver module 7201 is configured to: receive first information sent by a first AN device, in which the first information indicates a first time-domain configuration associated with a common resource, and the first time-domain configuration is different from an initial time-domain configuration associated with the common resource. Optionally, the transceiver module is used to perform at least one of the communication steps (such as step S2102, but are not limited thereto) such as transmission and/or reception performed by the terminal 102 in any of the above methods, which will not be repeated here.

FIG. 7c is a schematic structural diagram of a second AN device provided by an embodiment of the disclosure. As illustrated in FIG. 7c, the second AN device 7300 includes: a transceiver module 7301. In some embodiments, the transceiver module 7301 is configured to: receive third information sent by a first AN device, in which the third information indicates at least one of: a first time-domain configuration associated with a common resource associated with the first AN device, in which the first time-domain configuration is different from an initial time-domain configuration associated with the common resource; or whether the common resource is valid at different transmission time-domain positions, in which the transmission time-domain positions of the common resource are configured by the first time-domain configuration. Optionally, the transceiver module is used to perform at least one of the communication steps such as transmission and/or reception performed by the second AN device 103 in any of the above methods, which will not be repeated here.

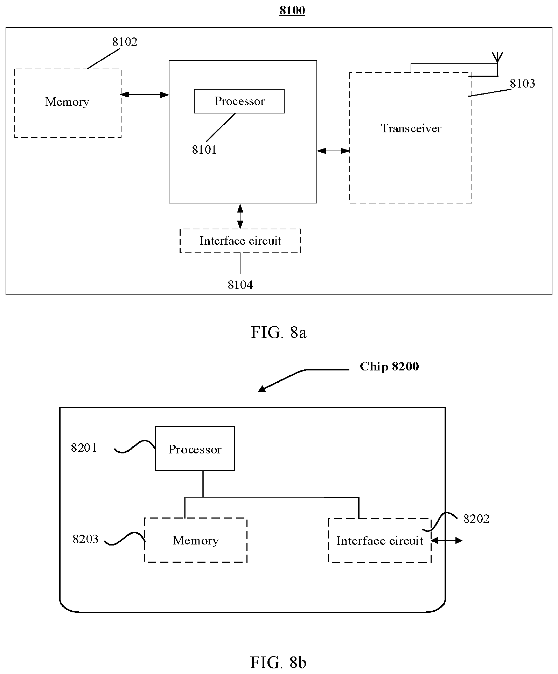

FIG. 8a is a schematic structural diagram of a communication device 8100 provided by an embodiment of the disclosure. The communication device 8100 may be a network device (e.g., an AN device or a CN device), a terminal (e.g., UE), a chip, a chip system or a processor that supports the network device to implement any of the above methods, or a chip, a chip system or a processor that supports the terminal to implement any of the above methods. The communication device 8100 is used to implement the method described in the above method embodiments, which can refer to the descriptions in the above method embodiments.

As illustrated in FIG. 8a, the communication device 8100 includes one or more processors 8101. The processor 8101 may be a general-purpose processor or a dedicated processor, such as a baseband processor or a central processor. The baseband processor is used to process communication protocols and communication data, while the central processor is used to control the communication device (e.g., a BS, a baseband chip, a terminal, a terminal chip, a DU or a CU), execute programs, and process data of the programs. Optionally, the communication device 8100 is used to implement any of the above methods. Optionally, the one or more processors 8101 are used to call instructions to cause the communication device 8100 to implement any of the above methods.

In some embodiments, the communication device 8100 further includes one or more transceivers 8103. When the communication device 8100 includes one or more transceivers 8103, the transceiver 8103 performs at least one of the communication steps (e.g., step S2101, step S2102 and step S2103, but are not limited thereto) such as transmission and/or reception in the above method, or the processor 8101 performs at least one of other steps. In optional embodiments, the transceiver may include a receiver and a transmitter. The receiver and the transmitter may be separated or integrated together. Optionally, the terms "transceiver", "transceiver unit", "transceiver machine", "transceiver circuit", "interface circuit" and "interface" are interchangeable, and the terms "transmitter", "transmitting unit", "transmitter machine" and "transmitting circuit" are also interchangeable. In addition, the terms "receiver", "receiving unit", "receiver machine" and "receiving circuit" are interchangeable.

In some embodiments, the communication device 8100 further includes one or more memories 8102 for storing data. Optionally, all or part of the memories 8102 may be external to the communication device 8100. In an optional embodiment, the communication device 8100 includes one or more interface circuits 8104. Optionally, the interface circuits 8104 are connected to the memories 8102, and the interface circuits 8104 are used to receive data from the memories 8102 or other devices and send data to the memories 8102 or other devices. For example, the interface circuits 8104 read the data stored in the memories 8102 and send the data to the processors 8101.

The communication device 8100 described in the embodiment may be a network device or a terminal. However, the scope of the communication device 8100 is not limited in the disclosure, and the structure of the communication device 8100 is not limited by FIG. 8a. The communication device may be a standalone device or part of a larger device. For example, the communication device may be: (1) a standalone integrated circuit (IC), a chip, a chip system or a sub-system; (2) a collection of one or more ICs (optionally, the collection includes storage components for storing data and programs); (3) an ASIC, such as a modem; (4) a module that can be embedded in other devices; (5) a receiver, a terminal, a smart terminal, a cellular phone, a wireless device, a handheld device, a mobile unit, an in-vehicle device, a network device, a cloud device, an AI device, etc.; or (6) others.

FIG. 8b is a schematic structural diagram of a chip 8200 provided by an embodiment of the disclosure. The case that the communication device 8100 is a chip or a chip system can refer to the schematic structural diagram of the chip 8200 shown in FIG. 8b, which is not limited herein.

The chip 8200 includes one or more processors 8201, and is used to implement any of the above methods.

In some embodiments, the chip 8200 includes one or more interface circuits 8202. Optionally, terms "interface circuit", "interface", "transceiver pin", etc. are interchangeable. In some embodiments, the chip 8200 further includes one or more memories 8203 for storing data. Optionally, all or part of the memories 8203 may be external to the chip 8200. Optionally, the interface circuit 8202 is connected to the memory 8203. The interface circuit 8202 is used to receive data from the memory 8203 or other devices, and send data to the memory 8203 or other devices. For example, the interface circuit 8202 reads the data stored in the memory 8203 and sends the data to the processor 8201.

In some embodiments, the interface circuit 8202 performs at least one of the communication steps (e.g., step S2101, step S2102 and step S2103, but are not limited thereto) such as transmission and/or reception in the above method. For example, the interface circuit 8202 performs the communication steps such as transmission and/or reception in the above method, which refers to that the interface circuit 8202 performs data interactions among the processor 8201, the chip 8200, the memory 8203 and transceivers. In some embodiments, the processor 8201 performs at least one of other steps.

The disclosure also provides a storage medium. The storage medium stores instructions, and when the instructions are executed by the communication device 8100, the communication device 8100 is caused to implement any of the above methods. Optionally, the storage medium is an electronic storage medium. Optionally, the storage medium may be a computer-readable storage medium or a storage medium readable by other devices, which is not limited herein. Optionally, the storage medium may be a non-transitory storage medium or a transitory storage medium, which is not limited herein.

The disclosure also provides a program product. When the program product is executed by the communication device 8100, the communication device 8100 is caused to implement any of the above methods. Optionally, the program product is a computer program product.

The disclosure also provides a computer program. When the computer program is executed by a computer, the computer is caused to implement any of the above methods.

## Claims

1. An information transmission method, performed by a first access network device, comprising:
sending first information to a terminal, wherein the first information indicates a first time-domain configuration associated with a common resource, and the first time-domain configuration is different from an initial time-domain configuration associated with the common resource.

2. The method of claim 1, wherein
the first information indicates the first time-domain configuration associated with the common resource within at least one time-domain window.

3. The method of claim 1 or 2, further comprising:
sending second information to the terminal, wherein the second information indicates whether the common resource is valid at different transmission time-domain positions of the common resource, and the transmission time-domain positions of the common resource are configured by the first time-domain configuration.

4. The method of any one of claims 1-3, wherein the first time-domain configuration comprises at least one of:
periodic information associated with the common resource;
transmission time-domain positions of the common resource; or
information regarding whether the common resource is valid at different transmission time-domain positions.

5. The method of any one of claims 1-4, wherein the common resource comprises at least one of:
a synchronization signal/physical broadcast channel block (SSB);
a system message block (SIB);
a common physical downlink control channel (PDCCH); or
a random access channel (RACH).

6. The method of any one of claims 1-5, further comprising:
sending third information to a second access network device, wherein the third information indicates at least one of:
the first time-domain configuration of the common resource; or
whether the common resource is valid at different transmission time-domain positions of the common resource, wherein the transmission time-domain positions of the common resource are configured by the first time-domain configuration.

7. The method of claim 6, wherein the third information further indicates at least one of:
a cell discontinuous transmission (DTX) configuration of the first access network device; or
whether the first access network device configures a cell DTX configuration.

8. The method of claim 6, wherein the third information is used for the second access network device to determine an SSB measurement time configuration (SMTC).

9. The method of any one of claims 1-8, wherein sending the first information to the terminal comprises:
sending the first information within a first modification period, wherein the first information is valid within a second modification period, a time-domain position of the second modification period is adjacent to a time-domain position of the first modification period, and the time-domain position of the second modification period is after the time-domain position of the first modification period.

10. The method of claim 9, wherein a length of the first modification period and/or a length of the second modification period is equal to N times a length of a cell discontinuous reception (DRX) cycle, and N is a positive integer.

11. The method of any one of claims 1-10, wherein sending the first information to the terminal comprises:
sending paging downlink control information (DCI) carrying the first information to the terminal.

12. The method of claim 11, wherein the paging DCI is sent within a first modification period, and the first modification period is associated with a system message update.

13. An information transmission method, performed by a terminal, comprising:
receiving first information sent by a first access network device, wherein the first information indicates a first time-domain configuration associated with a common resource, and the first time-domain configuration is different from an initial time-domain configuration associated with the common resource.

14. The method of claim 13, wherein
the first information indicates the first time-domain configuration associated with the common resource within at least one time-domain window.

15. The method of claim 13 or 14, further comprising:
receiving second information sent by the first access network device, wherein the second information indicates whether the common resource is valid at different transmission time-domain positions of the common resource, and the transmission time-domain positions of the common resource are configured by the first time-domain configuration.

16. The method of any one of claims 13-15, wherein the first time-domain configuration comprises at least one of:
periodic information associated with the common resource;
transmission time-domain positions of the common resource; or
information regarding whether the common resource is valid at different transmission time-domain positions.

17. The method of any one of claims 13-16, wherein the common resource comprises at least one of:
a synchronization signal/physical broadcast channel block (SSB);
a system message block (SIB);
a common physical downlink control channel (PDCCH); or
a random access channel (RACH).

18. The method of any one of claims 13-17, wherein receiving the first information sent by the first access network device comprises:
receiving the first information within a first modification period, wherein the first information is valid within a second modification period, a time-domain position of the second modification period is adjacent to a time-domain position of the first modification period, and the time-domain position of the second modification period is after the time-domain position of the first modification period.

19. The method of claim 18, wherein a length of the first modification period and/or a length of the second modification period is equal to N times a length of a cell discontinuous reception (DRX) cycle, and N is a positive integer.

20. The method of any one of claims 13-19, wherein receiving the first information sent by the first access network device comprises:
receiving paging downlink control information (DCI) carrying the first information sent by the first access network device.

21. The method of claim 20, wherein the paging DCI is received within a first modification period.

22. An information transmission method, performed by a second access network device, comprising:
receiving third information sent by a first access network device, wherein the third information indicates at least one of:
a first time-domain configuration associated with a common resource associated with the first access network device, wherein the first time-domain configuration is different from an initial time-domain configuration associated with the common resource; or
whether the common resource is valid at different transmission time-domain positions of the common resource, wherein the transmission time-domain positions of the common resource are configured by the first time-domain configuration.

23. The method of claim 22, wherein
the third information indicates the first time-domain configuration associated with the common resource within at least one time-domain window.

24. The method of claim 22 or 23, wherein the first time-domain configuration comprises at least one of:
a period associated with the common resource;
transmission time-domain positions of the common resource; or
whether the common resource is valid at different transmission time-domain positions.

25. The method of any one of claims 22-24, wherein the common resource comprises at least one of:
a synchronization signal/physical broadcast channel block (SSB);
a system message block (SIB);
a common physical downlink control channel (PDCCH); or
a random access channel (RACH).

26. The method of any one of claims 22-25, wherein the third information further indicates at least one of:
a cell discontinuous transmission (DTX) configuration of the first access network device; or
whether the first access network device configures a cell DTX configuration.

27. The method of any one of claims 22-25, wherein the third information is used for the second access network device to determine an SSB measurement time configuration (SMTC).

28. An information transmission method, performed by a communication system, comprising:
sending, by a first access network device, first information to a terminal, wherein the first information indicates a first time-domain configuration associated with a common resource, and the first time-domain configuration is different from an initial time-domain configuration associated with the common resource.

29. An information transmission apparatus, comprising:
a transceiver module, configured to send first information to a terminal, wherein the first information indicates a first time-domain configuration associated with a common resource, and the first time-domain configuration is different from an initial time-domain configuration associated with the common resource.

30. An information transmission apparatus, comprising:
a transceiver module, configured to receive third information sent by a first access network device, wherein the third information indicates at least one of:
a first time-domain configuration associated with a common resource associated with the first access network device, wherein the first time-domain configuration is different from an initial time-domain configuration associated with the common resource; or
whether the common resource is valid at different transmission time-domain positions of the common resource, wherein the transmission time-domain positions of the common resource are configured by the first time-domain configuration.

31. A communication system, comprising a first access network device, a second access network device and a terminal;
the first access network device is configured to implement the information transmission method of any one of claims 1-12;
the terminal is configured to implement the information transmission method of any one of claims 13-21; and
the second access network device is configured to implement the information transmission method of any one of claims 22-27.

32. A communication device, comprising:
one or more processors;
wherein the one or more processors are configured to call instructions to cause the communication device to implement the information transmission method of any one of claims 1-12, the information transmission method of any one of claims 13-21, or the information transmission method of any one of claims 22-27.33. A storage medium, wherein the storage medium stores instructions, and when the instructions are executed by a communication device, the communication device is caused to implement the information transmission method of any one of claims 1-12, the information transmission method of any one of claims 13-21, or the information transmission method of any one of claims 22-27.
